# EUROPÄISCHE PATENTSCHRIFT

(11) **EP 2 212 136 B1**
(45) Veröffentlichungstag und Bekanntmachung des Hinweises auf die Patenterteilung: **22.06.2011**
(21) Anmeldenummer: 08849726.8
(22) Anmeldetag: 13.11.2008
(51) Int. Cl.: B60H 1/00

(54) **VORRICHTUNG ZUR KÜHLUNG EINER WÄRMEQUELLE EINES KRAFTFAHRZEUGS**
DEVICE FOR COOLING A HEAT SOURCE OF A MOTOR VEHICLE
DISPOSITIF POUR REFROIDIR UNE SOURCE DE CHALEUR D'UN VÉHICULE AUTOMOBILE

(30) Priorität: 13.11.2007 DE 102007054504; 08.02.2008 DE 102008008353
(43) Veröffentlichungstag der Anmeldung: 04.08.2010
(60) Teilanmeldung: 10186542.6
(73) Patentinhaber: Behr GmbH & Co. KG, 70469 Stuttgart (DE)
(72) Erfinder: HECKENBERGER, Thomas, 70771 Leinfelden-Echterdingen (DE); PFENDER, Conrad, 74354 Besigheim (DE); NEUMEISTER, Dirk, 70374 Stuttgart (DE); FEUERECKER, Günther, 70567 Stuttgart (DE); WEHOWSKI, Manuel, 70563 Stuttgart (DE); BURK, Roland, 70469 Suttgart (DE); HERRMANN, Hans-Georg, 70619 Stuttgart (DE); ISERMEYER, Tobias, 74245 Löwenstein (DE); MOLDOVAN, Florian, 70569 Stuttgart (DE); STEINBACH, Martin, 71336 Waiblingen (DE)
(86) Internationale Anmeldenummer: PCT/EP2008/009583
(87) Internationale Veröffentlichungsnummer: WO 2009/062710

(56) Entgegenhaltungen:
- EP-A- 1 264 715
- EP-A- 1 637 709
- WO-A-2005/092650

## Beschreibung

Die Erfindung betrifft eine Vorrichtung zur Kühlung einer Wärmequelle eines Kraftfahrzeugs nach dem Oberbegriff des Anspruchs 1.

EP 1 264 715 B1 beschreibt ein Kühlsystem zur Kühlung einer temperaturerhöhenden Einheit wie etwa einer Fahrbatterie, bei dem die Wärme der Batterie durch einen Kühlmittelkreislauf abführbar und dem Kältekreis einer Klimaanlage des Fahrzeugs zuführbar ist. Zur Sicherstellung einer ausreichenden Wärmeabfuhr von der Fahrbatterie muss daher der Kältekreis in Betrieb sein.

Die WO 2005/092650 A1 offenbart eine Vorrichtung zur Kühlung einer Wärmequelle, umfassend einen mit der Wärmequelle in thermischen Kontakt stehenden Kühlkörper, wobei der Kühlkörper selektierbar von einem ersten oder zweiten Fluidstrom zur Abfuhr von Wärme beströmbar ist.

Es ist die Aufgabe der Erfindung, eine Vorrichtung zur Kühlung einer Wärmequelle eines Kraftfahrzeugs anzugeben, deren Betrieb auf einfache Weise und mit hoher Energieeffizienz an wechselnde Umgebungsbedingungen angepasst werden kann.

Die Aufgabe wird für eine eingangs genannte Vorrichtung erfindungsgemäß mit den kennzeichnenden Merkmalen des Anspruchs 1 gelöst. Durch die wahlweise Beströmung mit einem ersten oder einem zweiten Fluidstrom kann eine ausreichende Kühlung insbesondere unter optimaler Ausnutzung der Umgebungsbedingungen erreicht werden. Zum Beispiel kann so in einem ersten Betriebsmodus die Wärmepumpung eines im Verdichterbetrieb befindlichen Kältekreises einer Fahrzeug-Klimaanlage genutzt werden und in einem zweiten Betriebsmodus eine ausreichende Kühlung durch den anderen Fluidstrom auch dann sichergestellt werden, wenn der Verdichter des Kältekreises zum Beispiel im Winter nicht betrieben wird. Neben einer solchen Optimierung des Gesamtsystems im Hinblick auf die Umgebungsbedingungen kann auch eine erhöhte Betriebssicherheit erreicht werden, so dass selbst bei Ausfall des Verdichters des Kältekreises noch Kühlleistung durch einen der wählbaren Fluidströme erreicht werden kann.

Bei einer bevorzugten Ausführungsform handelt es sich bei der Wärmequelle um einen elektrischen Energiespeicher, insbesondere eine Lithium-lonen-Batterie. Ein solcher Energiespeicher kann eine Fahrbatterie des Fahrzeugs sein, das zum Beispiel als Hybridfahrzeug oder auch als reines Elektrofahrzeug ausgebildet sein kann. Insbesondere moderne Fahrbatterien, hier vor allem Lithium-lonen-Batterien erfordern aus Gründen der hohen Leistungsdichte, der Betriebssicherheit und der Optimierung der Lebensdauer ein unter allen Bedingungen optimal angepasstes Kühlsystem, welches geeignete Betriebstemperaturen der Fahrbatterie sicherstellt.

Bei einer erfindungsgemäßen Ausführungsform der Erfindung ist das Fluid des ersten Fluidstroms mit dem Fluid des zweiten Fluidstroms identisch. Erfindungsgemäß ist das Fluid dabei ein Kältemittel, wobei der erste Fluidstrom von einem Verdichter eines Kältekreises, insbesondere einer Klimaanlage, angetrieben ist und wobei der zweite Fluidstrom von einer Umwälzpumpe angetrieben ist. Der Verdichterbetrieb eines Kältekreises erfordert eine hohe Antriebsleistung, wobei ein Betrieb bei niedrigen Temperaturen im Sinne der Luftkonditionierung allenfalls bedingt erforderlich ist, zum Beispiel zur Luftentfeuchtung. Darüber hinaus ist bei noch tieferen Temperaturen ein Betrieb der Klimaanlage nicht möglich. Wird der Verdichter unter solchen Bedingungen abgestellt, so kann ein Zweig des Kältekreises mittels der vorgesehenen Umwälzpumpe als alternativer Fluidstrom im Sinne der Erfindung fungieren und nach Art eines einfachen Kühlkreises mit oder ohne wesentliche Nutzung der Phasenumwandlung des Kältemittels Wärme von der Wärmequelle abtransportieren. Bei einer solchen Ausführungsform kann im Allgemeinen entweder der erste Fluidstrom als Kältemittelstrom im Verdichterbetrieb selektiert werden oder alternativ der zweite Fluidstrom als Kältemittelstrom im Umwälzbetrieb. In einfacher und zweckmäßiger Detailgestaltung ist dabei jeder der beiden alternativen Fluidströme mittels eines Kondensators des Kältekreises kühlbar.

Besonders bevorzugt durchströmt dabei der zweite Fluidstrom ein dem Kühlkörper nachgeordnetes Ventil, welches den zweiten Fluidstrom aktiviert oder deaktiviert. Darüber hinaus kann es als Drosselventil den Druck im Kühlkörper entsprechend einstellen, falls das Sieden des Kältemittels im Kühlkörper unerwünscht ist.

Bei einer ersten zweckmäßigen Detailgestaltung der Erfindung sind in dem Kühlkörper ein erster Strömungspfad für den ersten Fluidstrom und ein zweiter Strömungspfad für den zweiten Fluidstrom ausgebildet. Zumindest für den Fall des für beide Fluidströme identischen Fluids kann es alternativ aber auch vorgesehen sein, dass beide Fluidströme den gleichen Strömungspfad in dem Kühlkörper durchströmen- Hierbei erfolgt die Selektion des Fluidstroms zweckmäßig über zumindest ein schaltbares Ventil.

Um zum Beispiel bei einem Kaltstart im Winter die zu kühlende Wärmequelle schnell auf eine gewünschte Betriebstemperatur zu bringen, ist es vorteilhaft vorgesehen, dass ein insbesondere elektrisches Heizglied zur selektierbaren Erwärmung der Wärmequelle von zumindest einem der Fluidströme beströmbar ist.

Bei einer weiteren bevorzugten Ausführungsform ist es vorgesehen, dass ein Fluid des ersten Fluidstroms ein Kältemittel eines Kältekreises, insbesondere einer Klimaanlage, ist und dass das Fluid des zweiten Fluidstroms ein von dem ersten Fluid getrenntes Kühlmittel eines Kühlmittelkreises ist. Hierdurch ist ebenfalls eine Möglichkeit geschaffen, auch bei Abschaltung des Kältekreises eine Kühlung der Wärmequelle mittels Beströmung durch das Kühlmittel des Kühlkreises zu erzielen. Bei einer solchen Variante können die Fluidströme sowohl alternativ als auch kumulativ zum Kühlkörper geleitet werden, wobei in der kumulativen Variante eine besonders hohe Kühlleistung ermöglicht ist. Insbesondere kann eine solche kumulative Beströmung durch beide Fluidströme bei hohen Außentemperaturen und/oder bei hoher Leistung der Wärmequelle gewünscht sein. Hinsichtlich des Fluidstroms des Kältemittels ist der Kühlkörper zweckmäßig nach Art eines Verdampfers mit einem vorgeordneten Expansionsorgan ausgebildet, so dass innerhalb des Kühlkörpers eine Verdampfung bzw. Phasenumwandlung des Kältemittels stattfindet. Hinsichtlich des Kühlmittels wird im Regelfall keine Verdampfung stattfinden, wobei dies im Sinne der Erfindung aber nicht ausgeschlossen ist.

In zweckmäßiger Ausgestaltung umfasst der Kühlmittelkreis eine Umwälzpumpe und einen Kühler zur Abfuhr von Wärme aus dem Fluid. Der Kühler kann zum Beispiel als Niedertemperaturkühler in einem fahrtwindbeströmten Frontbereich des Fahrzeugs vorgesehen sein.

Um zum Beispiel bei einem Kaltstart im Winter eine Fahrbatterie schnell auf gewünschte Betriebstemperatur zu bringen kann es vorgesehen sein, dass der Kühlmittelkreis einen Wärmeübertrager zur selektierbaren Erwärmung des Kühlmittels stromaufwärts der Fahrbatterie aufweist. Bei einer möglichen Detailgestaltung kann der zusätzliche Wärmeübertrager Wärme aus einem Bremsvorgang des Fahrzeugs auf das Fluid übertragen. Es kann sich dabei um eine Induktionsbremse, ohmsche Heizung oder auch um eine Reibungsbremse handeln.

Zweckmäßig kann in dem Kühlkreislauf zudem eine weitere Wärmequelle zur Kühlung vorgesehen sein. Dabei kann es sich um eine beliebige geeignete Komponente des Fahrzeugs handeln, zum Beispiel einen Elektromotor oder die Leistungselektronik.

In bevorzugter Ausgestaltung ist der Kühlkörper selektierbar von dem Kühlkreislauf abtrennbar, insbesondere mittels eines Ventils. Dies kann insbesondere dann vorteilhaft sein, wenn in einem Betriebsmodus der Kühlkreislauf zur Kühlung anderer Komponenten verwendet wird und die Wärmequelle bzw. Fahrbatterie mittels des Fluidstroms aus dem Kältekreis gekühlt wird.

Bei einer weiteren Ausführungsform der Erfindung ist einer der Fluidströme ein Luftstrom. In zweckmäßiger Detailgestaltung ist die Luft des Fluidstroms dabei zumindest wählbar Umgebungsluft von außerhalb des Fahrzeugs. Dabei wird dem Umstand Rechnung getragen, dass die Umgebungsluft vor allem dann ausreichend kühl ist, wenn die Klimaanlage des Fahrzeugs nicht eingeschaltet ist. Alternativ kann die Luft jedoch auch von innerhalb des Fahrzeugs sein.

Bevorzugt umfasst der Kühlkörper von der Luft umströmbare Kühlrippen, um eine optimale Wärmeabgabe an den Luftstrom zu ermöglichen.

Ganz allgemein kann zur Sicherstellung eines schnellen Erreichens einer Betriebstemperatur der Wärmequelle, insbesondere einer Fahrbatterie, vorgesehen sein, dass an dem Kühlkörper ein elektrisches Heizelement zur selektierbaren Erwärmung der Wärmequelle angeordnet ist. Dabei kann es sich etwa um ein in unmittelbar in thermischem Kontakt stehendes Heizelement handeln oder auch um ein Heizelement zur Beströmung des Kühlkörpers mit erwärmter Luft.

In einer weiteren vorteilhaften Ausgestaltung der Erfindung ist ein Fluid des ersten Fluidstroms ein Kältemittel eines Kältekreises, insbesondere einer Klimaanlage, wobei abströmseitig des Kühlkörpers im Kältekreis ein Drosselelement vorgesehen ist.

Dieses Drosselelement kann entweder als Fixdrossel oder als verstellbares Ventil (z.B. elektronisches Expansionsventil) mit variablem Druckverlust gestaltet werden. Durch das Drosselelement wird eine Erhöhung des Saugdruckes in der mit Kältemittel durchströmten Flut des Kühlkörpers erzielt, so dass durch das gesteigerte Druckniveau die Verdampfungstemperatur des Kältemittels angehoben wird.

Ober eine Variation der Verdampfungstemperatur wird das treibende Temperaturgefälle zwischen Kältemittel und Wärmequelle verändert, wodurch der abgeführte Wärmestrom variiert werden kann.

Dementsprechend kann mithilfe einer Saugdruckveränderung eine Anpassung des abgeführten Wärmestroms an unterschiedliche Betriebssituationen vorgenommen werden:

Sofern ein kontinuierlicher Betrieb des Kühlkörpers nicht erwünscht ist, kann in einer weiteren Ausführungsform zuströmseitig des Kühlkörpers im Kältekreis in Taktventil oder Absperrventil vorgesehen sein. Ein derartiger Betrieb ist beispielsweise dann wünschenswert, wenn ein kontinuierlicher Betrieb zu einer zu hohen Wärmestromabfuhr über das Kältemittel führt, wodurch die Wärmequelle auf ein zu tiefes Temperaturniveau geführt wird. Ein tiefes Temperaturniveau kann energieineffizient sein und bei einer Traktionsbatterie zu schlechteren Wirkungsgraden führen.

Vorteilhaft ist, dass die Wärmequelle ein elektrischer Energiespeicher ist, insbesondere eine Lithium-lonen-Batterie.

Vorteilhaft ist, dass jeder der beiden Fluidströme mittels eines Kondensators des Kältekreises kühlbar ist.

Vorteilhaft ist, dass der Kühlmittelkreis eine Umwälzpumpe und einen Kühler zur Abfuhr von Wärme aus dem Fluid umfasst.

Vorteilhaft ist, dass der Kühlmittelkreis einen Wärmeübertrager zur selektierbaren Erwärmung des Kühlmittels aufweist.

Vorteilhaft ist, dass der Wärmeübertrager Wärme aus einem Bremsvorgang des Fahrzeugs auf das Fluid überträgt.

Vorteilhaft ist, dass eine weitere Wärmequelle durch den Kühlkreislauf kühlbar ist.

Vorteilhaft ist, dass die Luft des Fluidstroms Umgebungsluft von außerhalb des Fahrzeugs ist.

Vorteilhaft ist, dass die Luft des Fluidstroms Luft aus der Fahrgastkabine des Fahrzeugs ist.

Vorteilhaft ist, dass der Kühlkörper von der Luft umströmbare Kühlrippen umfasst.

Weitere Vorteile und Merkmale der Erfindung ergeben sich aus den nachfolgend beschriebenen Ausführungsbeispielen sowie aus den abhängigen Ansprüchen.

Nachfolgend werden mehrere bevorzugte Ausführungsbeispiele der Erfindung beschrieben und anhand der anliegenden Zeichnungen näher erläutert.
- Fig. 1: zeigt eine schematische Darstellung eines ersten Ausführungs- beispiels der Erfindung.
- Fig. 2: zeigt eine erste Abwandlung des Ausführungsbeispiels aus Fig. 1.
- Fig. 3: zeigt eine zweite Abwandlung des Ausführungsbeispiels aus Fig. 1.
- Fig. 4: zeigt eine schematische Darstellung eines zweiten Ausführungs- beispiels der Erfindung.
- Fig. 5: zeigt eine erste Abwandlung des Ausführungsbeispiels aus Fig. 4.
- Fig. 6: zeigt eine zweite Abwandlung des Ausführungsbeispiels aus Fig. 4.
- Fig. 7: zeigt eine dritte Abwandlung des Ausführungsbeispiels aus Fig. 4.
- Fig. 7a: zeigt eine Abwandlung des Ausführungsbeispiels aus Fig. 7.
- Fig. 7b: zeigt eine weitere Abwandlung des Ausführungsbeispiels aus Fig. 7.
- Fig. 8: zeigt eine räumliche schematische Ansicht eines Kühlkörpers ei- nes dritten Ausführungsbeispiels der Erfindung.
- Fig. 9: zeigt den Kühlkörper aus Fig. 8 mit eingesetzten elektrischen Speicherzellen.
- Fig. 10: zeigt eine schematische Darstellung des dritten Ausführungsbei- spiels der Erfindung mit dem Kühlkörper aus Fig. 8.

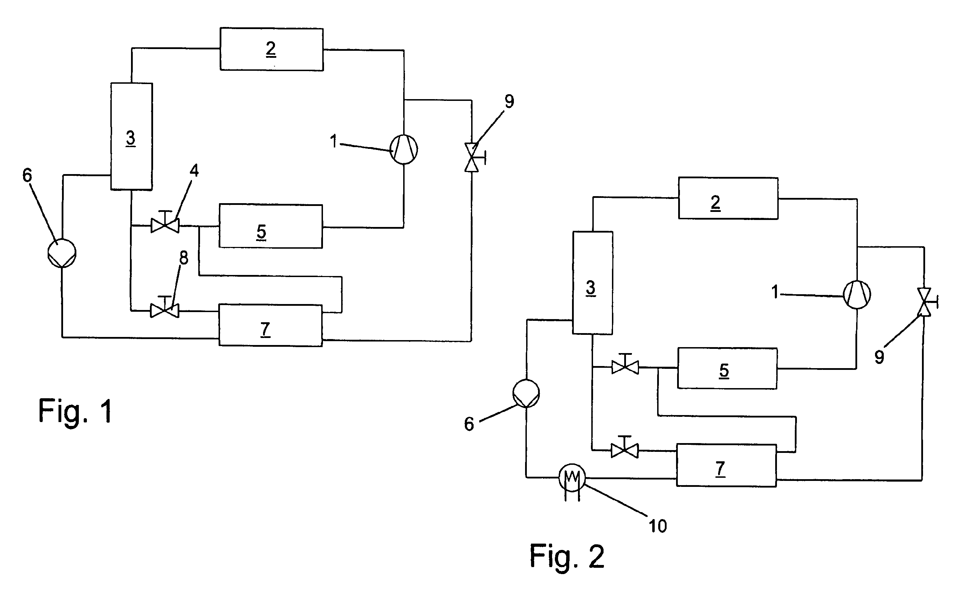

Die Darstellung des ersten Ausführungsbeispiels nach Fig. 1 zeigt einen Kältekreis einer Klimaanlage des Kraftfahrzeugs mit einem Verdichter 1, einem nachfolgenden Kondensator 2, einem Sammler 3, einem Expansionsorgan 4 und einem Verdampfer 5 zur Kühlung und Entfeuchtung von Luft zur Luftkonditionierung eines Fahrgastraums. Nach dem Sammler 3 zweigt zudem ein erster Strömungspfad des Kreislaufs ab, in dem eine Umwälzpumpe 6 und ein nachfolgender Kühlkörper 7 angeordnet sind. Ausgangsseitig des Kühlkörpers 7 mündet dieser Strömungspfad nach Durchlaufen eines Drosselventils 9 hinter dem Verdichter 1 und vor dem Kondensator 2 wieder in den Kältekreis.

Ein weiterer Abzweig des Kältekreises zweigt nach dem Sammler 3 und vor dem Expansionsventil 4 ab. Dieser zweite Strömungspfad durchläuft ein zweites Expansionsorgan 8 und nachfolgend den Kühlkörper 7, wobei die Kanäle des ersten Strömungspfads und des zweiten Strömungspfads innerhalb des Kühlkörpers 7 getrennt verlaufen. Der zweite Strömungspfad führt ausgangsseitig des Kühlkörpers 7 zu einer Einmündung zwischen dem ersten Expansionsorgan 4 und dem Verdampfer 5.

Der Kühlkörper 7 ist baueinheitlich mit einer Wärmequelle des Fahrzeugs in Form einer Fahrbatterie thermisch leitend verbunden. Die Fahrbatterie ist beispielsweise eine Lithium-lonen-Batterie, die Verlustwärme an den Kühlkörper 7 abgibt. Das Fahrzeug ist im konkreten Ausführungsbeispiel ein Hybrid-Fahrzeug mit Verbrennungsmotor und Elektromotor oder ein reines Elektrofahrzeug.

Die Erfindung funktioniert nun wie folgt:

In einer ersten Betriebsart ist der Verdichter 1 deaktiviert und die Umwälzpumpe 6 aktiviert. Die Pumpe 6 saugt flüssiges Kältemittel aus dem Sammler 3 an und fördert dieses durch den ersten Strömungspfad des Kühlkörpers 7 zur Aufnahme und Abfuhr der Wärme der Fahrbatterie. Das Ventil 9 ist so eingestellt, dass das Kältemittel am Eintritt des Kühlkörpers als flüssige Phase vorliegt, wobei es im Regelfall keiner Phasenumwandlung unterliegt. Insbesondere kann das Ventil 9 als Drosselventil so eingestellt sein, dass das Kältemittel in den nachfolgenden Kondensator als Gas-Flüssigkeitsgemisch (Nassdampf) eintritt. In dem Kondensator wird die aufgenommene Wärme an die Umgebungsluft abgegeben und das Kältemittel gekühlt, so dass es sich in dem nachfolgenden Sammler 3 wieder in flüssiger Phase ansammelt.

In dieser Betriebart stellt das nicht verdichtete, sondern nur gepumpte Kältemittel, einen ersten Fluidstrom zur Beströmung des Kühlkörpers 7 im Sinne der Erfindung dar.

Diese erste Betriebsart ermöglicht die Kühlung der Wärmequelle über Komponenten der Fahrzeug-Klimaanlage dann, wenn ein Verdichterbetrieb zur Luftkonditionierung des Fahrgastraums nicht erforderlich, nicht effektiv oder gar nicht möglich ist, zum Beispiel im Winter.

In einer zweiten Betriebsart ist der Verdichter 1 eingeschaltet und das Ventil 9 geschlossen oder auch die Pumpe 6 fluiddicht deaktiviert, so dass der Kühlkörper 7 nach Art eines Verdampfers in den Kältekreis integriert ist. Die Ausformung der Kanäle in dem Kühlkörper ist insbesondere bezüglich des zweiten Strömungspfads auf die Funktion als Verdampfer optimiert. Eine Verteilung des Kältemittelstroms auf den Kühlkörper 7 und den Verdampfer 5 kann durch Einstellung der Expansionsorgane 4, 8 erfolgen. Der Ausgang des Kühlkörpers 7 kann in einer Abwandlung auch hinter dem Verdampfer 5 einmünden; grundsätzlich sind verschiedene Verschaltungen des als Verdampfer betriebenen Kühlkörpers 7 und des Verdampfers 5 denkbar. In dieser zweiten Betriebsart stellt das verdichtete und über den Verdichter 1 geförderte Kältemittel einen zweiten Fluidstrom zur Beströmung des Kühlkörpers im Sinne der Erfindung dar.

Der Kühlkörper 7 kann baulich zum Beispiel dadurch realisiert werden, dass zwei oder mehr Kühlkörperplatten flächig miteinander verbunden werden, wobei in der einen Platte der Kanal für den ersten Strömungspfad und in einer weiteren Platte der Kanal für den zweiten Strömungspfad und analog gegebenenfalls in weiteren Platten weitere Strömungspfade angeordnet sind. Die Verbindung sollte gut wärmeleitend sein, vorzugsweise verlöten Zur thermisch effektiv verbundenen Halterung von Lithium-lonen-Batterien an einem fluiddurchströmten Kühlkörper sind aus dem Stand der Technik viele Beispiele bekannt.

In einer anderen Ausführungsform können zwei oder mehrere Fluidführungskanäle in einer Kohlkörperplatte getrennt voneinander angeordnet werden.

Bei der in Fig. 2 dargestellten Abwandlung ist im Unterschied zum ersten Ausführungsbeispiel zusätzlich eine elektrische Heizquelle 10 nach der Umwälzpumpe 6 angeordnet. Eine elektrische Heizquelle ist besonders dann vorteilhaft, wenn elektrisch vorliegende Bremsenergie einer kalten Batterie nicht zugeführt werden kann und so zumindest zur Aufwärmung nutzbar gemacht werden kann. Insbesondere im Winterbetrieb, in dem der erste Strömungspfad besonders sinnvoll betrieben wird, kann bei einem Kaltstart des Fahrzeugs eine schnelle Erwärmung der Fahrbatterie auf eine Betriebstemperatur gewünscht sein. Hierdurch ist eine höhere Batterieleistung ermöglicht und auch die Lebensdauer der Batterie kann durch Verkürzung der Aufwärmphase verbessert werden.

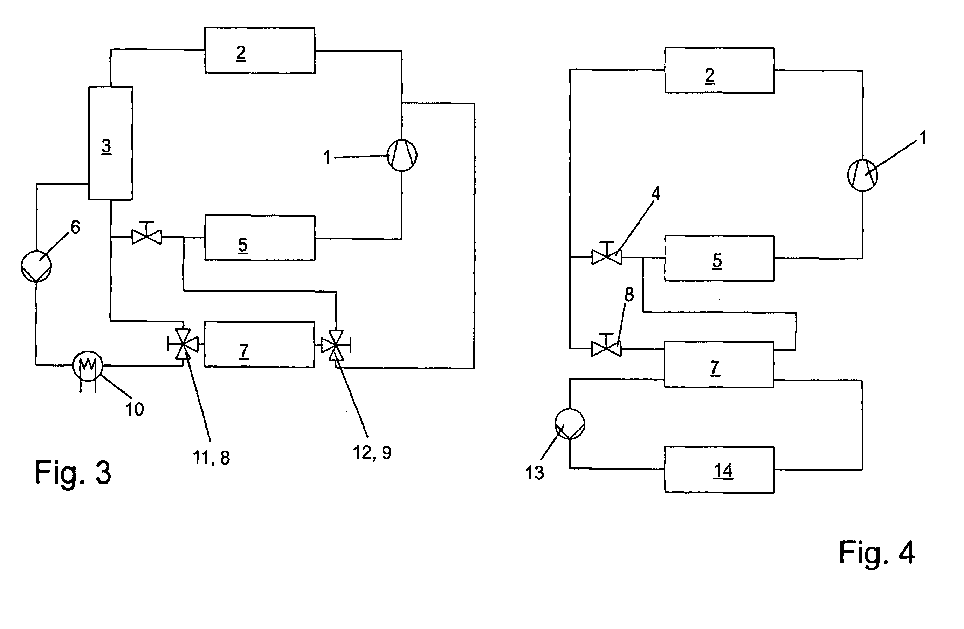

Bei der in Fig. 3 gezeigten Abwandlung ist im Unterschied zu dem Beispiel nach Fig. 2 nur ein einziger Kanal zur Durchströmung mit Kältemittel in dem Kühlkörper 7 vorgesehen, so dass dieser baulich vereinfacht wird. Zur Selektion des ersten Strömungspfads oder des zweiten Strömungspfads je nach gewählter Betriebsart sind am Eintritt und am Austritt des Kühlkörpers jeweils Ventilanordnungen 11, 12 nach Art von schaltbaren Mehrwegventilen vorgesehen. In der eintrittsseitigen Ventilanordnung 11 ist zudem das Expansionsorgan 8 für den Betrieb des Kühlkörpers als Verdampfer integriert. In die austrittsseitige Ventilanordnung 12 ist das Drosselventil 9 zum Betrieb des Kühlkörpers im Kühlmittelkreis mit der Umwälzpumpe 6 integriert.

Fig. 4 zeigt ein zweites Ausführungsbeispiel der Erfindung. Der Kühlkörper 7 kann hier wie im Beispiel nach Fig. 1 von zwei Strömungspfaden in separaten Fluten bzw. Kanälen durchströmt werden. Der erste Strömungspfad entspricht dabei der Durchströmung mit Kältemittel des Kältekreises der Fahrzeug-Klimaanlage wie in der zweiten Betriebsart des ersten Ausführungsbeispiels nach Fig. 1.

Im Unterschied zu dem Beispiel nach Fig. 1 ist jedoch keine zur Verdichtung alternative Umwälzung des Kältemittels in einem schaltbaren Strömungspfad vorgesehen, sondern ein von dem Kältekreis stofflich separater Kühlkreis mit einer Umwälzpumpe 13 und einem Niedertemperaturkühler 14. Der Kühler 14 ist üblicherweise im Frontbereich des Fahrzeugs angeordnet und von Fahrtwind durchströmbar.

Das Fluid des Kühlkreises ist in der Regel eine Flüssigkeit wie etwa ein Wasser-Glykol-Gemisch. Eine Phasenumwandlung des Kühlmittels innerhalb des Kühlkreislaufs ist nicht vorgesehen, aber prinzipiell möglich.

Bei diesem Ausführungsbeispiel kann die Fahrbatterie bzw. deren Kühlkörper 7 entweder nur mittels des Kältekreises oder nur mittels des Kühlkreises (z.B. bei abgeschaltetem Verdichter 1) oder auch mit beiden Kreisläufen gekühlt werden. Hierdurch ist eine besonders gute Anpassung an die Umgebungsbedingungen und die thermische Lastsituation der Wärmequelle möglich. Das den Kühlkörper beströmende Kältemittel und das den Kühlkörper beströmende Kühlmittel stellen zwei verschiedene Fluidströme im Sinne der Erfindung dar.

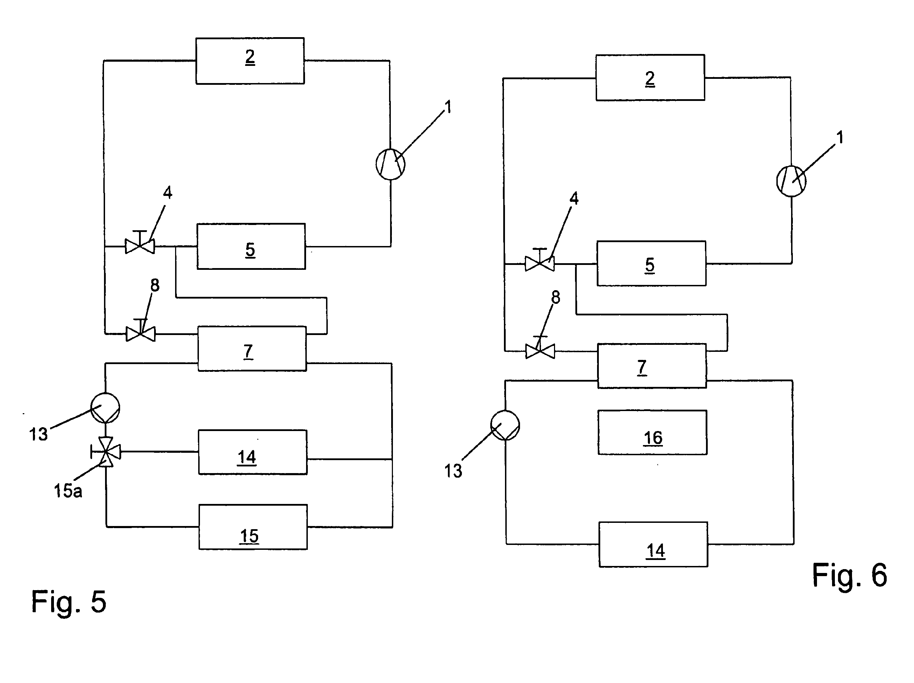

Bei einer ersten Abwandlung des zweiten Ausführungsbeispiels ist gemäß Fig. 5 ein Heizmittel 15, zum Beispiel ein elektrischer Heizer, in dem Kühlkreislauf vorgesehen, um bei Bedarf eine schnelle Erwärmung der Batterie auf eine Betriebstemperatur zu ermöglichen. Um in einer solchen Aufwärm-Betriebsart, z.B. beim Kaltstart, möglichst wenig Wärme nach außen abzugeben ist das elektrische Heizmittel 15 in einem zu dem Kühler 14 parallelen Zweig bzw. Bypass angeordnet, der über ein Mehrwegventil 15a selektierbar ist.

Bei der zweiten Abwandlung des Beispiels aus Fig. 4 gemäß Fig. 6 ist ebenfalls ein Heizmittel 16 zu dem gleichen Zweck vorgesehen. Das Heizmittel 16 ist jedoch nicht in den Kühlkreislauf integriert sondern in Form eines elektrischen Heizers, vorzugsweise eines PTC-Heizers (PTC = positiver Temperaturkoeffizient) unmittelbar an dem Kühlkörper 7 angeordnet. Die Beheizung kann dabei durch unmittelbare Wärmeleitung oder auch durch Heißluftbeströmung mittels eines Gebläses erfolgen.

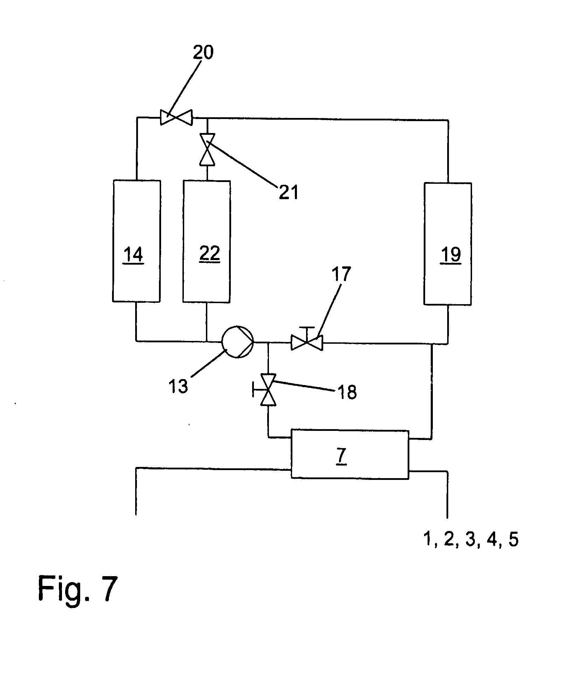

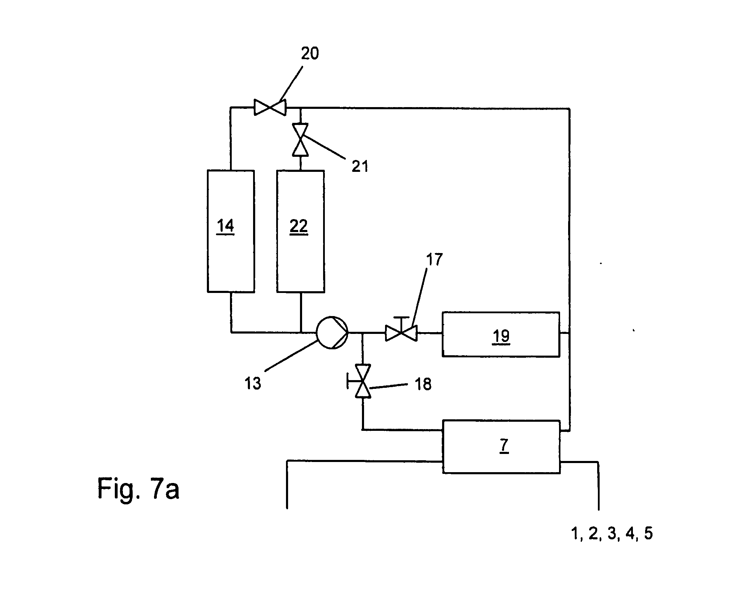

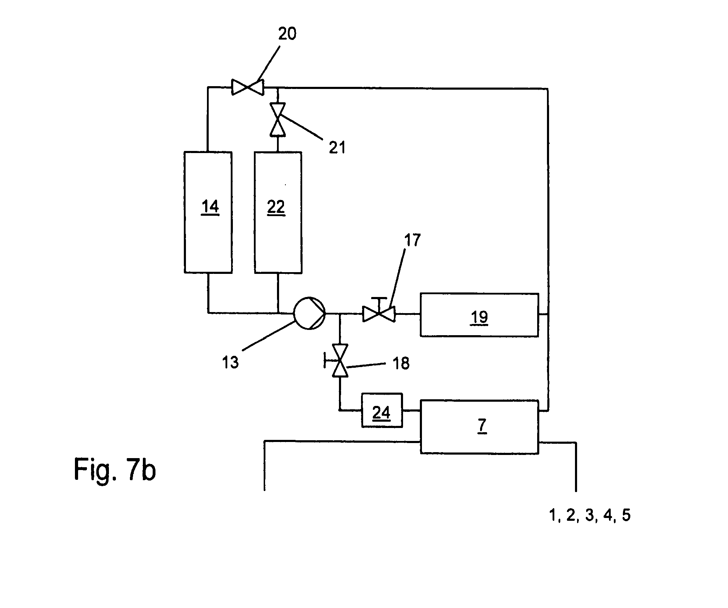

Bei der dritten Abwandlung des zweiten Ausführungsbeispiels gemäß Fig. 7 ist der Kühlkörper 7 in einem optionalen, mittels Schaltventilen ansteuerbaren Zweig des Kühlkreislaufs angeordnet. Der Kühlkreislauf umfasst zumindest ein weiteres zu kühlendes Aggregat 19. Um eine ausreichende Kühlung der Fahrbatterie sicherzustellen, ist vorliegend der optionale Zweig des Kühlkörpers 7 stromaufwärts des Aggregats 19 angeordnet.

Parallel zu dem Niedertemperaturkühler 14 ist ein über Schaltventile 20, 21 beströmbarer Wärmetauscher 22 vorgesehen, über den Abwärme einer Fahrzeugbremse in den Kühlkreislauf eingeleitet werden kann. Hierdurch kann ohne den Verbrauch elektrischer Energie eine Aufheizung der Wärmequelle auf Betriebstemperatur (Kaltstart) erreicht werden. Eine solche Lösung für eine Batterieheizung ist besonders im Fall eines reinen Elektrofahrzeugs interessant. Der Wärmetauscher 22 kann im Prinzip auch mit anderen Wärmequellen verbunden sein, zum Beispiel dem Abgas eines Verbrennungsmotors eines Hybridfahrzeugs.

In einer Abwandlung des Ausführungsbeispiels gemäß Fig- 7 ist in Fig. 7a das Aggregat 19 unmittelbar hinter dem Ventil 17 angeordnet. Somit strömt ein Teilmassenstrom durch das Aggregat 19 und ein Teilmassenstrom durch den Kühlkörper 7. Durch eine derartige Ausführungsform wird erreicht, dass der durch das Aggregat 19 strömende Teilmassenstrom auf einem tieferen Temperaturniveau liegt als in der Ausführungsform gemäß Fig. 7, da keine Vermischung der Teilmassenströme vor dem Eintritt in das Aggregat 19 erfolgt.

In einer weiteren Abwandlung gemäß Fig. 7b kann ein Heizkörper 24 des Klimagerätes vor dem Kühlkörper 7 angeordnet sein. Damit wird die Kabinenluft über diesen Teilmassenstrom erwärmt und der Teilmassenstrom kühlt sich im Gegenzug ab. Diese Abkühlung wirkt sich positiv auf die Leistung des Kühlkörpers 7 aus. In einem nicht gezeigten Ausführungsbeispiel kann der Heizkörper 24 auch hinter dem Kühlkörper 7 angeordnet sein.

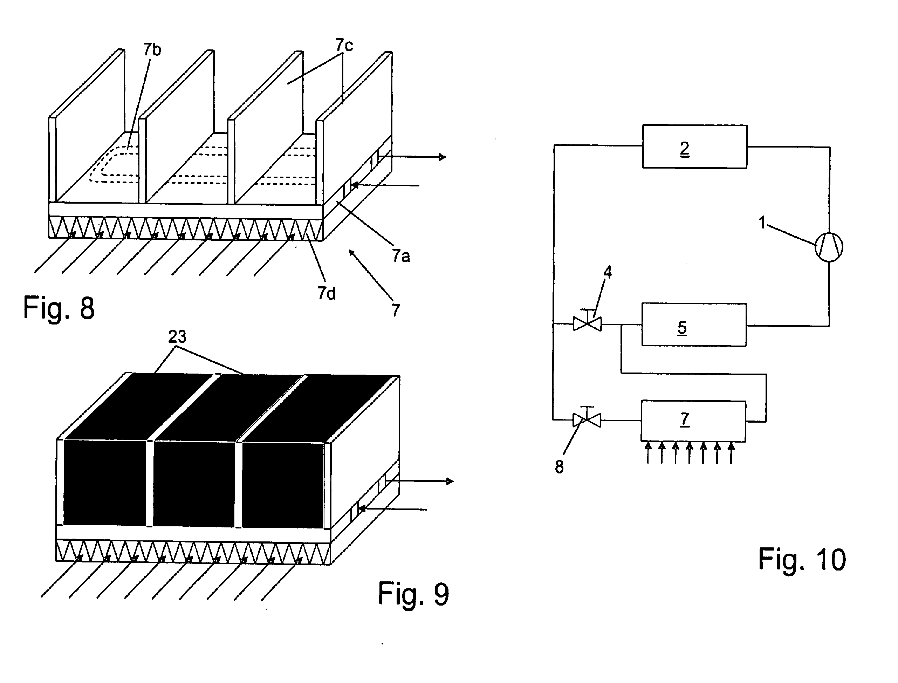

Fig. 8 bis Fig. 10 zeigen ein drittes Ausführungsbeispiel der Erfindung, bei dem ein erster Fluidstrom zur Beströmung des Kühlkörpers in Form eines Kältemittels als erstes Fluid vorliegt. Ein zweiter Fluidstrom wird durch strömende Kühlluft als zweites Fluid ausgebildet.

Dargestellt ist lediglich der Kühlkörper 7, in den in Fig. 9 zudem schematisch dargestellte Lithium-lonen-Batterien eingesetzt sind.

Der Kühlkörper 7 besteht im Wesentlichen aus einem plattenförmigen Körper 7a, in dem mindestens ein Kanal 7b zur Durchströmung mit einem Fluid ausgebildet ist. Bei dem Fluid handelt es sich vorliegend um ein Kältemittel eines Kältekreises wie etwa der Fahrzeug-Klimaanlage. Der Kühlkörper 7 ist hierzu zweckmäßig als Verdampfer des Kältekreises ausgebildet. Der Kühlkörper 7 kann aber auch an einen Kühlkreislauf mit einer Umwälzpumpe angeschlossen sein. Insgesamt wird hierzu auf die vorstehend beschriebenen Ausführungsbeispiele verwiesen.

Auf einer batterieseitigen Seite der Platte 7a sind wärmeleitende Kühlrippen 7c vorgesehen, die zwischen den einzelnen Batteriezellen 23 angeordnet sind, um deren Wärme möglichst optimal und gleichmäßig zum Körper 7a zu leiten.

Auf der anderen Seite des plattenförmigen Körpers 7a sind luftbeströmbare Kühlrippen 7d vorgesehen, um den Kühlkörper möglichst effektiv mit Luft beströmen zu können. Bei der Kühlluft handelt es sich bevorzugt um Umgebungsluft von außerhalb des Fahrzeugs. Diese kann zum Beispiel mittels eines Gebläses und eines Luftkanals zugeführt werden. Dabei wird die Umgebungsluft regelmäßig besonders kühl sein, wenn die Klimaanlage des Fahrzeugs nicht aktiviert ist.

Zur Gewährleistung eines guten Wärmeabtransports über die Luft sind eine hohe Wärmeleitfähigkeit der Kühlrippen 7d sowie eine dünnwandige Kühlplatte 7a von Vorteil. Ebenso ist ein hoher Luftdurchsatz mit einem hohen Wärmeübergangskoeffizienten vorteilhaft.

Es versteht sich, dass die einzelnen Merkmale der Ausführungsbeispiele sinnvoll miteinander kombiniert werden können. Insbesondere ist die Luftbeströmung gemäß dem dritten Ausführungsbeispiel auch mit jedem der Kühlkörper 7 der zuvor beschriebenen zwei Ausführungsbeispiele kombinierbar. Hierdurch wären dann jeweils drei Fluidströme zur wählbaren, alternativen oder kumulativen kühlenden Beströmung des Kühlkörpers gegeben.

In den vorliegenden Ausführungsformen war der Kältemittelkreislauf so ausgeführt, dass er mit einem auf der Hochdruckseite kondensierenden Kältemittel wie beispielsweise R134a betrieben werden kann. Es versteht sich, dass bei Verwendung des Kältemittels R744 entsprechende Variationen erforderlich sind, wie beispielsweise Ersatz des Kondensators durch einen Gaskühler, die Platzierung des Sammlers auf der Niederdruckseite und gegebenenfalls Hinzunahme eines inneren Wärmeübertragers. Derartige Änderungen beziehungsweise Variationen des Kältemittelkreislaufes sind dem Fachmann aus dem Stand der Technik hinlänglich bekannt.

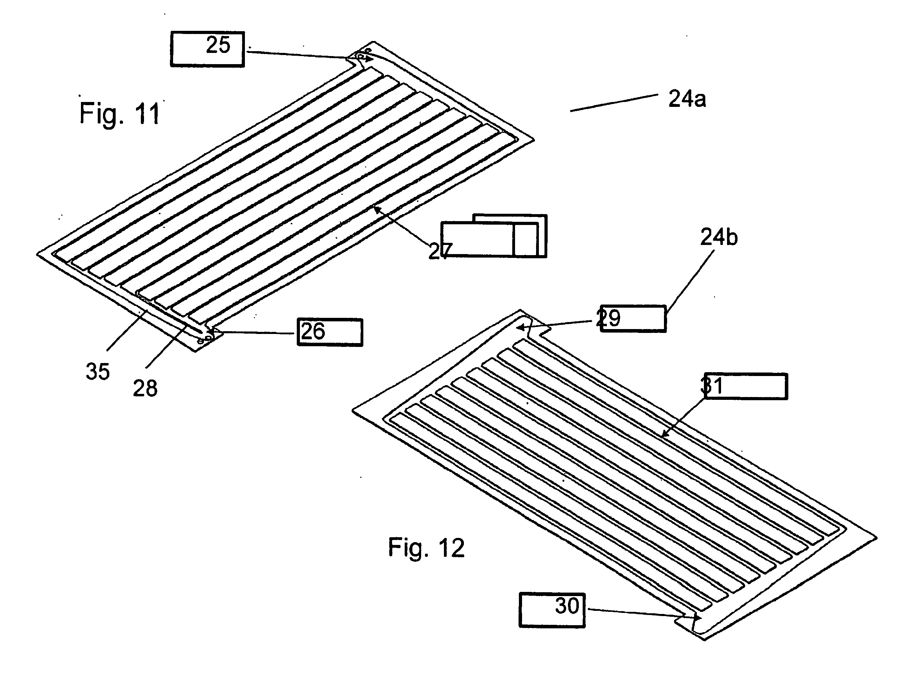

Die Fig. 11 bis 14 zeigen ein Ausführungsbeispiel eines Kühlkörpers 7, wie er insbesondere bei den Ausführungsbeispielen gemäß der Fig. 4 bis Fig. 7 zum Einsatz kommt. Der Kühlkörper 7 wird in diesen Ausführungsbeispielen von einem Kältemittel und einem in einem separaten Kühlkreis strömenden Kühlmittel durchströmt.

Der Kühlkörper besteht aus zwei Kanalplatten 24a für das Kältemittel und 24b für das Kühlmittel, wobei jede Kanalplatte eine Vielzahl von Kanälen 27 für das Kältemittel und Kanälen 31 für das Kühlmittel aufweist.

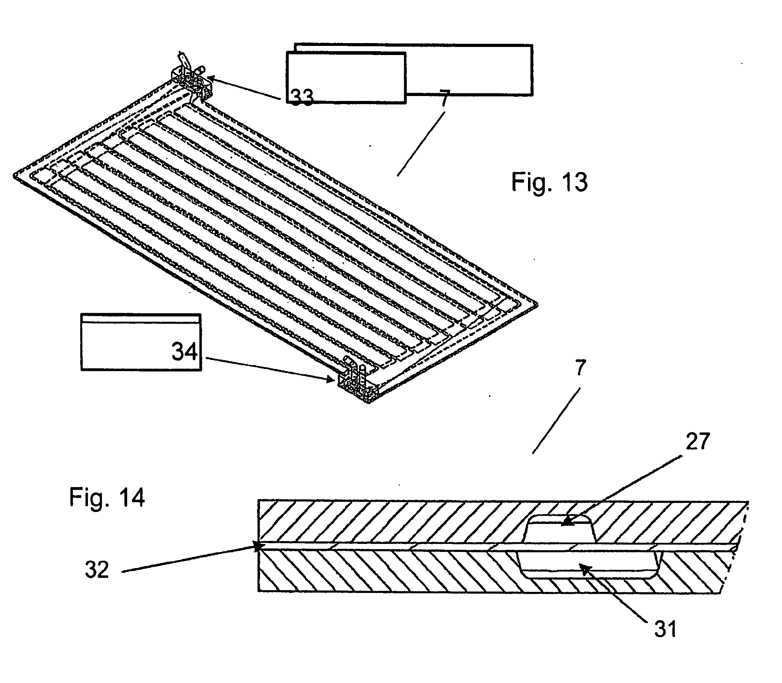

Die beiden Kanalplatten sind durch ein beidseitig lotplatiertes Blech 32 (siehe Fig. 14) voneinander getrennt, so dass sich separate Strömungspfade 27 und 31 für das Kältemittel und Kühlmittel ergeben.

Um einen möglichst kompakten und baumraumsparenden Kühlkörper 7 zu erzielen, werden die Zuläufe 26 und 29 und Abläufe 25 und 30 für das Kältemittel beziehungsweise Kühlmittel in Anschlussblöcken 33 und 34 zusammengefasst.

In einer nicht dargestellten Alternative ist es weiterhin möglich, die Kanäle 27 und 31 mit Rippen oder Turbulenzeinlagen zu versehen, um die wärmeübertragende Oberfläche zu vergrößern.

Um insbesondere auf der Kältemittelseite des Kühlkörpers 7 eine Gleichverteilung des Kältemittels zu gewährleisten, wird der einströmseitige Sammelkanal 35 mit einer Stegrippe 28 versehen. Der Querschnitt im Sammelkanal 35 ist so gewählt, dass eine leicht beschleunigte Strömung vorliegt. Hierzu verjüngt sich der Sammelkanal im Querschnitt stromaufwärts entsprechend der Abgänge in die Kanäle 27 der kältemittelführenden Kanalplatte 24a.

Durch intensive Messungen hat sich eine Massenstromdichte von > 80 kg/m²s als günstig erwiesen, um einen gleichbleibenden Wärmeübergangskoeffizienten zu erzielen.

Durch eine derartige Ausgestaltung des Kühlkörpers 7 ergeben sich eine reihe von Vorteilen:
- Bauraumoptimierung, da die beiden Kanalplatten in einem Block gefertigt werden können.
- Eine unabhängige Gestaltung der Kanalgeometrien und deren Anschlüsse für jede Platte, da keine Gefahr einer Überschneidung besteht.

## Patentansprüche

1. Vorrichtung zur Kühlung einer Wärmequelle eines Kraftfahrzeugs, umfassend einen mit der Wärmequelle in thermischem Kontakt stehenden Kühlkörper (7), wobei der Kühlkörper (7) von einem ersten Fluidstrom zur Abfuhr von Wärme beströmbar ist, wobei der Kühlkörper (7) selektierbar von mindestens einem zweiten Fluidstrom zur Abfuhr von Wärme beströmbar ist, **dadurch gekennzeichnet, dass** das Fluid des ersten Fluidstroms mit dem Fluid des zweiten Fluidstroms identisch ist und wobei der erste Fluidstrom von einem Verdichter (1) eines Kältekreises, insbesondere einer Klimaanlage, angetrieben ist und wobei der zweite Fluidstrom von einer Umwälzpumpe (6) angetrieben ist.

2. Vorrichtung nach Anspruch 1, **dadurch gekennzeichnet**, das der zweite Fluidstrom ein dem Kühlkörper (7) nachgeordnetes Ventil (9) durchströmt.

3. Vorrichtung nach einem der Ansprüche 1 oder 2, **dadurch gekennzeichnet, dass** in dem Kühlkörper (7) ein erster Kanal für den ersten Fluidstrom und ein zweiter Kanal für den zweiten Fluidstrom ausgebildet sind.

4. Vorrichtung nach einem der Ansprüche 1 oder 2, **dadurch gekennzeichnet, dass** beide Fluidströme den gleichen Kanal in dem Kühlkörper durchströmen.

5. Vorrichtung nach Anspruch 4, **dadurch gekennzeichnet, dass** die Selektion des Fluidstroms über zumindest ein schaltbares Ventil (11,12) erfolgt.

6. Vorrichtung nach einem der vorhergehenden Ansprüche, **dadurch gekennzeichnet, dass** ein insbesondere elektrisches Heizglied (10) zur selektierbaren Erwärmung der Wärmequelle von zumindest einem der Fluidströme beströmbar ist.

7. Vorrichtung nach einem der vorhergehenden Ansprüche, **dadurch gekennzeichnet, dass** an dem Kühlkörper ein elektrisches Heizelement (16) zur selektierbaren Erwärmung der Wärmequelle angeordnet ist.

8. Vorrichtung nach einem der vorhergehenden Ansprüche, **dadurch gekennzeichnet, dass** ein Fluid des ersten Fluidstroms ein Kältemittel eines Kältekreises, insbesondere einer Klimaanlage, ist und dass abströmseitig des Kohlkörpers (7) im Kältekreis ein Drosselelement vorgesehen ist.

9. Vorrichtung nach einem der vorhergehenden Ansprüche, **dadurch gekennzeichnet, dass** ein Fluid des ersten Fluidstroms ein Kältemittel eines Kältekreises, insbesondere einer Klimaanlage, ist und dass zuströmseitig des Kühlkörpers (7) im Kältekreis ein Ventil, insbesondere ein Taktventil, vorgesehen ist, so dass eine getaktete Kältemittelzufuhr in den Kühlkörper (7) ermöglicht wird.

## Claims

1. A device for cooling a heat source of a rotor vehicle, comprising a cooling body (7) which is in thermal contact with the heat source, a first fluid stream for the discharge of heat being capable of flowing to the cooling body (7), at least one second fluid stream for the discharge of heat being capable of flowing selectably to the cooling body (7), **characterized in that** the fluid of the first fluid stream is identical to the fluid of the second fluid stream, the first fluid stream being driven by a compressor (1) of a cooling circuit, in particular an air conditioning system, and the second fluid stream, being driven by a circulating pump (6).

2. The device as claimed in claim 1, **characterized in that** the second fluid stream flows through a valve (9) connected downstream of the cooling body (7).

3. The device as claimed in either claim 1 or 2, **characterized in that** a first duct for the first fluid stream and a second duct for the second fluid stream: are formed in the ins body (7).

4. The device as claimed in either claim 1 or 2, **characterized in that** the two fluid streams flow through the same duct in the cooling body.

5. The device as claimed in claim 4, **characterized in that** the selection of the fluid stream takes place via at least one switchable valve (11, 12).

6. A device as claimed in any one of preceding claims, **characterized in that** at least one of the fluid streams can flow to a heating element, in particular an electrical heating element (10) for the selectable heating of the heat source.

7. A device as claimed in any one of the preceding claims, **characterized in that** an electrical heating element (16) four the selectable heating of the heat source is arranged on the cooling body.

8. A device as claimed in any one of the preceding claims, **characterized in that** a fluid of the first fluid stream is a coolant of a cooling circuit, in particular of an air conditioning system, and **in that** a throttle element is provided downstream of the cooling body (7) in the cooling circuit.

9. A device as claimed in any one of the preceding claims, **characterized in that** a fluid of the first fluid stream is a coolant of a cooling circuit, in particular of as air conditioning system, and **in that** a valve, in particular a clock valve, is provided on the inflow side of the cooling body (7) in the cooling circuit, so that a clocked supply of coolant into the cooling body (7) becomes possible.

## Revendications

1. Dispositif de refroidissement d'une source de chaleur d'un véhicule automobile, comprenant un refroidisseur (7) se trouvant en contact thermique avec la source de chaleur, où le refroidisseur (7) peut être traversé par un premier flux de fluide servant à la dissipation de chaleur, où le refroidisseur (7) peut être traverse, de façon sélective, par au moins un deuxième flux de fluide servant à la dissipation de chaleur,
**caractérisé en ce que** le fluide du flux de fluide est identique au fluide du deuxième flux de fluide, et où le premier flux de fluide est entraîné par un compresseur (1) d'un circuit frigorifique, en particulier d'un système de climatisation, et ou le deuxième flux de fluide est entraîné par une pompe de circulation (6).

2. Dispositif selon la revendication 1, **caractérisé en ce que** le deuxième flux de fluide traverse une vanne (9) disposée en aval du refroidisseur (7).

3. Dispositif selon l'une des revendications 1 ou 2, **caractérisé en ce qu'**un premier conduit pour le premier flux de fluide et un deuxième conduit pour le deuxième flux de fluide sont configurés dans le refroidisseur (7).

4. Dispositif selon l'une des revendications 1 ou 2, **caractérisé en ce que** les deux flux de fluide traversent le même conduit dans le refroidisseur.

5. Dispositif selon la revendication 4, **caractérisé en ce que** la sélection du flux de fluide est effectuée par au moins une vanne pilotable (11, 12).

6. Dispositif selon l'une quelconque des revendications précédentes, **caractérisé en ce que** notamment un élément chauffant électrique (10) servant au chauffage sélectif de la source de chaleur peut être traversé par au moins l'un des flux de fluide.

7. Dispositif selon l'une quelconque des revendications précédentes, **caractérisé en ce qu'**un élément chauffant électrique (16) servant au chauffage sélectif de la source de chaleur est disposé sur le refroidisseur.

8. Dispositif selon l'une quelconque des revendications précédentes, **caractérisé en ce qu'**un fluide du premier flux de fluide est un fluide frigorigène d'un circuit frigorifique, en particulier d'un système de climatisation, et qu'un élément d'étranglement est prévu dans le circuit frigorifique, côté sortie du refroidisseur (7).

9. Dispositif selon l'une quelconque des revendications précédentes, **caractérisé en ce qu'**un fluide du premier flux de fluide est un fluide frigorigène d'un circuit frigorifique, en particulier d'un système de climatisation, et qu'une vanne, en particulier une vanne de synchronisation, est prévue dans le circuit frigorifique, côté entrée du refroidisseur (7), de sorte qu'une alimentation synchronisée en fluide frigorigène est rendue possible dans le refroidisseur (7),
